# EUROPÄISCHE PATENTSCHRIFT

(11) **EP 2 098 343 B1**
(45) Veröffentlichungstag und Bekanntmachung des Hinweises auf die Patenterteilung: **25.04.2012**
(21) Anmeldenummer: 08004160.1
(22) Anmeldetag: 06.03.2008
(51) Int. Cl.: B27C 9/04, B27M 1/08

(54) **Bearbeitungsvorrichtung**
Processing device
Dispositif de traitement

(43) Veröffentlichungstag der Anmeldung: 09.09.2009
(73) Patentinhaber: Homag Holzbearbeitungssysteme AG, 72296 Schopfloch (DE)
(72) Erfinder: Gringel, Martin, 72479 Straßberg (DE); Zeller, Robert, 72175 Dornhan (DE); Sturm, Gotthilf, 72293 Glatten (DE)
(74) Vertreter: HOFFMANN EITLE

(56) Entgegenhaltungen:
- WO-A1-92/12816
- DE-A1- 10 317 486
- DE-C1- 4 442 896
- DE-U1- 20 107 745

## Beschreibung

### Technisches Gebiet

Die Erfindung betrifft eine Bearbeitungsvorrichtung zum Bearbeiten von Platten, insbesondere zum Aufteilen durch Ausschneiden oder Ausfräsen von Werkstücken aus Platten, nach dem Oberbegriff von Anspruch 1.

### Stand der Technik

Eine solche Bearbeitungsvorrichtung ist aus WO9212816 A1 bekannt.

Bearbeitungsvorrichtungen der eingangs genannten Art kommen bei Platten jeglicher Art zum Einsatz, bei denen aus einer Rohplatte Zuschnitte generiert werden sollen, die je nach Bedarf auch zusätzliche Bearbeitungen wie Fräsungen, Bohrungen usw. aufweisen können. Typischerweise findet man diese Bearbeitungsaufgabe in der Möbel- und Bauelementefertigung. Dort werden großformatige Spanplatten auf kleinere Formate mittels Plattenaufteilsägen zugeschnitten.

Um die Wirtschaftlichkeit einer immer häufiger angestrebten kommissionsweisen Fertigung mit der Losgröße 1 deutlich zu steigern, sind die bisher bekannten Vorrichtungen für die beschriebene Bearbeitungsaufgabe nicht optimal. Gefordert werden Vorrichtungen mit geringen Investitionskosten, einem geringen Platzbedarf, einem hohen Automatisierungsgrad für das Teilehandling bei geringem technischen Aufwand sowie einer hohen Bearbeitungsgenauigkeit der Werkstücke, so dass die Folgebearbeitungen deutlich reduziert werden können. Weiterhin ist der erzielbare Optimierungsrad bei der Verschnitttoptimierung für die Wirtschaftlichkeit der Vorrichtung von entscheidender Bedeutung. Diese wird auch vom konstruktiven Aufbau der Vorrichtung beeinflusst.

Diese Bearbeitungsaufgabe wird üblicherweise durch Plattensägen im Bereich des Zuschnitts einer Fertigung gelöst, allerdings sind für die Herstellung von Werkstücken aus großformatigen Platten entweder zwei aufeinanderfolgende Sägeschritte in einer Maschine oder aber zwei verkettete Plattensägen in Winkelanordnung erforderlich. Diese Technik ist mit hohen Investitionskosten und einem großen Platzbedarf für die Maschinen verbunden. Weiterhin ist das Teilehandling nach erfolgtem Zuschnitt nur mit hohem Aufwand automatisierbar und wird üblicherweise mit Handhabungsgeräten zum Abstapeln realisiert. Auch ist die erzielbare Winkelgenauigkeit mit Plattensägen insbesondere bei größeren Werkstückformaten wesentlich schlechter als dies mit CNC-Oberfräsen möglich ist.

In jüngster Vergangenheit wurden neue CNC-Maschinenkonzepte als Oberfräsen zum sogenannten Nesting realisiert, deren Leistungsfähigkeit weit über die reine Aufteilung hinausgeht. So können auf diesen Maschinen Komplettbearbeitungen durchgeführt werden, wie dies beispielsweise bei der Frontenfertigung im Möbelbereich erforderlich ist. Kennzeichnend für diese Maschinen ist, dass die zu bearbeitende Rohplatte auf einer vakuumdurchlässigen Verschleißplatte gespannt wird, welche ihrerseits auf einem Vakuumtisch (Maschinentisch) befestigt ist. Es können auch Formteile mit beliebigem Konturverlauf bearbeitet werden. Neben einem hohen Energieaufwand für die Vakuumerzeugung ist die Automatisierung des Teilehandlings mit Vereinzelung der Werkstücke sehr aufwändig, die erforderliche Tischreinigung für eine gesicherte Aufspannung sowie die Kosten für die Verschleißplatten sind ebenfalls nachteilig.

Ferner offenbart die DE 196 27 946 A1 eine CNC-Oberfräse nach dem Oberbegriff von Anspruch 1. Diese zeichnet sich dadurch aus, dass die Platten anstelle mittels Vakuum durch eine entlang eines Maschinentisches verfahrbare Greifeinrichtung gehalten und verschoben werden. Allerdings hat sich gezeigt, dass bei dieser Vorrichtung insbesondere bei der Herstellung von Freiformteilen ein erheblicher Nachbearbeitungsaufwand an der Trennkante entsteht bzw. nicht die gewünschte Qualität der Trennkante erzielt werden kann.

Die DE 201 07 745 U1 offenbart eine Schneidevorrichtung für plattenförmige Werkstücke, die einen in seiner vertikalen Achse verschieblichen Fräser sowie eine in den beiden Raumrichtungen X und Y in seiner horizontalen Lage verfahrbare Einrichtung aufweist, wobei an der Einrichtung das zu bearbeitende Werkstück befestigt ist.

### Darstellung der Erfindung

Es ist daher Aufgabe der vorliegenden Erfindung, eine Bearbeitungsvorrichtung der eingangs genannten Art bereitzustellen, die in einem Arbeitsgang die Herstellung qualitativ hochwertiger Werkstücke, insbesondere im Bereich der Trennkante, ermöglicht.

Diese Aufgabe wird erfindungsgemäß durch eine Bearbeitungsvorrichtung nach Anspruch 1 gelöst. Besonders bevorzugte Weiterbildungen der Erfindung sind in den abhängigen Ansprüchen angegeben.

Der Erfindung liegt der Gedanke zugrunde, das jeweilige, aus der Platte herauszutrennende Werkstück so lange sicher zu fixieren, bis das Werkstück vollständig herausgetrennt ist, um auf diese Weise eine besonders saubere Trennkante zu erhalten, die nicht nachbearbeitet werden muss. Vor diesem Hintergrund ist erfindungsgemäß vorgesehen, dass eine gattungsgemäße Bearbeitungsvorrichtung ferner mindestens ein Fixierelement, insbesondere mindestens einen zu dem Tisch zustellbaren Niederhalter aufweist, wobei das mindestens eine Fixierelement eingerichtet ist, ein aus der Platte herauszutrennendes Werkstück zu fixieren, während dieses aus der Platte herausgetrennt wird.

Auf diese Weise kann das jeweilige Werkstück bis zum Abschluss des Trennschnitts sicher und ohne Verrutschen gehalten werden, so dass unerwünschte Unregelmäßigkeiten der Trennkante vermieden werden können. Hierdurch erhält man gegenüber dem Stand der Technik qualitativ deutlich höherwertigere Werkstücke, und zwar ohne Nachbearbeitungsaufwand. Darüber hinaus lässt sich durch die vorliegende Erfindung sogar noch die Bearbeitungsgeschwindigkeit steigern, und zwar ohne Abstriche bei der Qualität der Trennkante.

Das Fixierelement kann im Rahmen der Erfindung auf unterschiedlichste Art und Weise ausgestaltet sein und beispielsweise auch von unter auf das jeweilige Werkstück einwirken. Dabei kann das Fixierelement auf vielfältige Weise gelagert sein, beispielsweise auch durch einen Roboter- oder Schwenkarm. Gemäß einer Weiterbildung der Erfindung ist jedoch vorgesehen, dass mindestens ein Fixierelement an einem sich in der ersten Richtung erstreckenden Träger angeordnet und entlang des Trägers verfahrbar ist. Auf diese Weise ist einerseits keine separate Halteanordnung für das Fixierelement erforderlich, sodass sich eine einfache und kostengünstige Konstruktion der Bearbeitungsvorrichtung ergibt. Darüber hinaus ermöglicht die Verfahrbarkeit des Fixierelements entlang des Trägers einen variablen und auf die jeweilige Bearbeitungseinheit abgestimmten Betrieb des Fixierelements. Vor diesem Hintergrund ist es besonders bevorzugt, dass auch mindestens eine Bearbeitungseinheit an dem Träger angeordnet ist.

Gemäß einer Weiterbildung der Erfindung ist ferner vorgesehen, dass mehrere Fixierelemente vorgesehen sind, die unabhängig voneinander betätigbar sind. Hierdurch wird es möglich, beispielsweise bei komplexen Werkstücken oder speziellen Betriebsarten der Bearbeitungsvorrichtung mehrere Fixierelemente kooperieren zu lassen oder in einem Wechselbetrieb arbeiten zu lassen.

Gemäß einer Weiterbildung der Erfindung ist ferner vorgesehen, dass mindestens ein Fixierelement zusätzlich ein Führungselement aufweist, welches es ermöglicht, dass das Werkstück auf dem Tisch bewegbar bleibt und das Fixierelement nur die Führung des Werkstücks in der Z-Richtung ausführt. Auf diese Weise wir eine besonders freie Schnittführung (z. B. Diagonalschnitte) bei weiterhin hoher Werkstückqualität erreicht.

Darüber hinaus kann das Fixierelement gemäß einer Weiterbildung der Erfindung zusätzlich einen Vakuumgreifer aufweisen, der bevorzugt ausstellbar und/oder auch drehbar ist, sodass Werkstücke manipuliert werden können. Hierdurch kann die Gefahr von Verschmutzungen und Beschädigungen der Werkstücke vermindert werden.

Gemäß einer Weiterbildung der Erfindung ist ferner vorgesehen, dass das Fixierelement zusätzlich in der zweiten Richtung verfahrbar ist. Hierdurch lässt sich der Bearbeitungsbetrieb der Vorrichtung, insbesondere der jeweiligen Bearbeitungseinheit, noch flexibler gestalten.

Um eine präzise Aufteilung der jeweiligen Ausgangsplatte zu ermöglichen und darüber hinaus eine Verschnittoptimierung zu erzielen, ist gemäß einer Weiterbildung der Erfindung vorgesehen, dass das Fixierelement zusätzlich Anschlagmittel für die Ausrichtung der Rohplatte in der zweiten Richtung aufweist.

Um jegliche Nebenzeiten zu vermeiden und einen kontinuierlichen Betrieb der erfindungsgemäßen Bearbeitungsvorrichtung zu ermöglichen, ist gemäß einer Weiterbildung der Erfindung vorgesehen, dass die Bearbeitungsvorrichtung ferner eine Transporteinrichtung zum Ein- und/oder Austransportieren einer Rohplatte bzw. abgetrennter Werkstücke aufweist, die bevorzugt in den Tisch integriert ist.

Alternativ oder zusätzlich kann die erfindungsgemäße Bearbeitungsvorrichtung ferner eine Luftkissenanordnung mit einer Mehrzahl von Luftaustrittsdüsen aufweisen, die bevorzugt in den Tisch integriert sind. Hierdurch werden Beschädigungen der jeweiligen Platten bzw. Werkstücke vermieden, und es kann gegebenenfalls eine einfache Transporteinrichtung zum Einsatz kommen. Dabei ist zu beachten, dass im Rahmen der vorliegenden Erfindung auch ein andersartiges, friktionsarmes Gleitsystem, gegebenenfalls mit zusätzlicher Luftkissenfunktion, zum Einsatz kommen kann.

Darüber hinaus ist gemäß einer Weiterbildung der Erfindung vorgesehen, dass der Tisch im Bereich der mindestens einen Bearbeitungseinheit eine Abfallaufnahme, insbesondere Abfallklappe zur Abfuhr von Restteilen aufweist. Hierdurch lässt sich der Reinigungsaufwand der Bearbeitungsvorrichtung beträchtlich minimieren, was auch zu einer erhöhten Qualität der hergestellten Werkstücke beiträgt und Mehrfachzerspanungen minimiert.

Gemäß einer weiteren Zielrichtung stellt die vorliegende Erfindung ein System zum Herstellen von Werkstücken unter Einsatz einer erfindungsgemäßen Bearbeitungsvorrichtung nach Anspruch 11 bereit. Dieses System zeichnet sich dadurch aus, dass die erfindungsgemäße Bearbeitungsvorrichtung mit einem Gestelleingang vernetzt ist, sodass auf optimale Weise eine kommissionsweise Fertigung in Losgröße 1 realisiert werden kann.

### Kurze Beschreibung der Zeichnungen

- Fig. 1: zeigt schematisch eine Perspektivansicht einer Bearbeitungsvorrichtung als bevorzugte Ausführungsform der vorliegenden Erfindung;
- Fig. 2: zeigt schematisch eine teilweise Perspektivansicht der in Fig. 1 gezeigten Vorrichtung;
- Fig. 3: zeigt schematisch eine teilweise Perspektivansicht der in Fig. 1 gezeigten Vorrichtung;
- Fig. 4: zeigt schematisch eine teilweise Perspektivansicht der in Fig. 1 gezeigten Vorrichtung.

Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

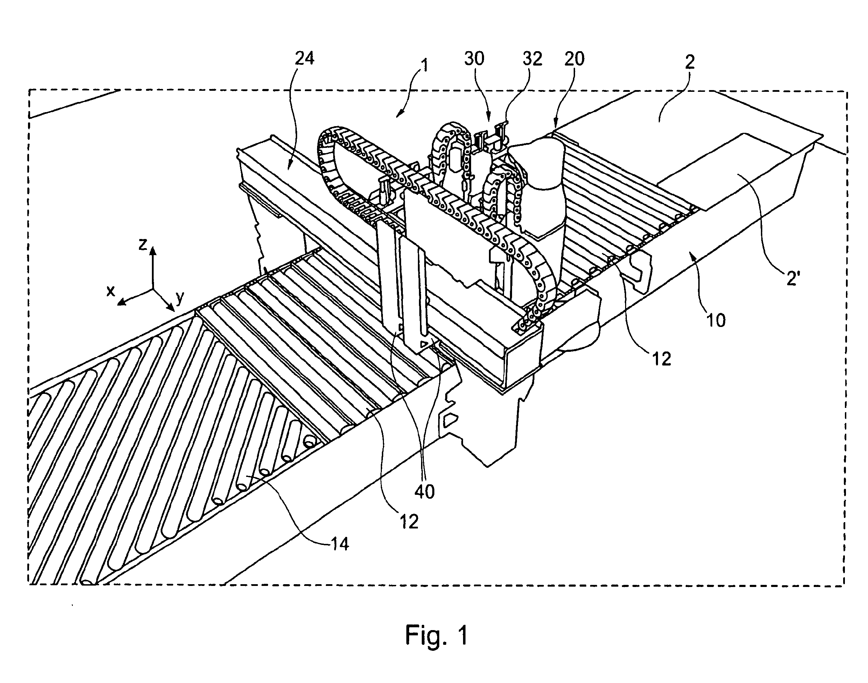

Eine Bearbeitungsvorrichtung 1 zum Bearbeiten von Platten 2 als bevorzugte Ausführungsform der vorliegenden Erfindung ist in den Figuren 1 bis 4 schematisch in Perspektivansichten gezeigt. Die Bearbeitungsvorrichtung 1 dient in der vorliegenden Ausführungsform zum Aufteilen von Platten 2 in Werkstücke 2', wie dies beispielsweise im Bereich der Möbel- und Bauelementeindustrie bei Platten aus Holz, Holzwerkstoffen, Kunststoff oder dergleichen häufig erforderlich ist.

Wie in Fig. 1 am besten zu erkennen ist, besitzt die Bearbeitungsvorrichtung 1 zunächst einen Maschinentisch zur Aufnahme der jeweiligen Platte 2. Der Maschinentisch 10 umfasst in seiner oberen Fläche nicht gezeigte Luftaustrittsöffnungen, um unterhalb der jeweiligen Platte 2 ein Luftkissen bilden zu können. Darüber hinaus besitzt der Tisch 10 in der vorliegenden Ausführungsform absenkbare und antreibbare Rollen 12, mittels derer jeweils von der Platte 2 abgetrennte Werkstücke (in Fig. 1 nicht gezeigt) ausgefördert werden können.

Der Verfahrbetrieb der Platte 2 wird bei der vorliegenden Ausführungsform durch eine entlang des Tisches 10 in einer Richtung X verfahrbaren Verschiebeeinrichtung 30 übernommen. Diese weist in der vorliegenden Ausführungsform mehrere Greifer 32 auf, um die jeweilige Platte 2 zu greifen und an der Verschiebeeinrichtung 30 zu halten. Auf diese Weise kann die Platte 2 in X-Richtung entlang des Tisches 10 in jede beliebige Position gebracht werden und dabei auf dem Luftkissen des Tisches 10 bleiben. Dabei können die Greifer 32 beispielsweise auch quer zur Förderrichtung (z. B. oberhalb des Tisches 10) angeordnet sein.

Ferner umfasst die Bearbeitungsvorrichtung 1 eine Bearbeitungseinheit 20, die in der vorliegenden Ausführungsform durch eine Bearbeitungsspindel gebildet ist, in die Bearbeitungswerkzeuge 22 oder gegebenenfalls auch Bearbeitungsaggregate aus einem Werkzeugmagazin eingewechselt werden können. Bei dem Werkzeug 22 kann es sich beispielsweise um einen Fräser handeln, der eingerichtet ist, die jeweilige Platte 2 in mehrere Werkstücke aufzuteilen.

Die Bearbeitungseinheit 20 ist an einem Träger 24 eines Portals angeordnet, das an dem Maschinentisch 10 angebracht ist. Selbstverständlich kann anstelle eines Portals beispielsweise auch ein Ausleger vorgesehen sein. Dabei ist die Bearbeitungseinheit 20 entlang des Trägers 24 in einer sich senkrecht zur Richtung X erstreckenden Richtung Y verfahrbar. Darüber hinaus kann die Bearbeitungseinheit 20 auch in einer sich vertikal erstreckenden Richtung Z in Bezug auf den Träger 24 verfahrbar sein.

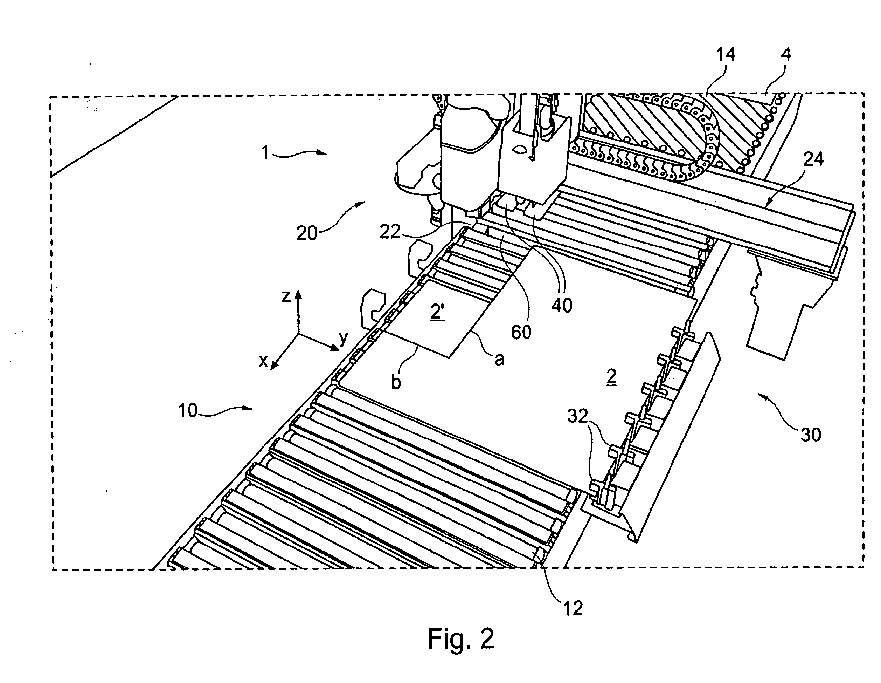

Weiterhin umfasst die Bearbeitungsvorrichtung 1 zwei Niederhalter 40 als Fixierelemente, die in Fig. 2 noch besser zu erkennen sind. Die Niederhalter 40 sind ebenfalls an dem Träger 24 angeordnet, und zwar derart, dass sei unabhängig voneinander zu dem Tisch 10 zugestellt bzw. verfahren werden können, um ein aus der Platte 2 herauszutrennendes Werkstück 2' in Bezug auf den Tisch 10 zu fixieren, während dieses aus der Platte 2 herausgetrennt wird.

Darüber hinaus sind die Niederhalter 40 auch entlang des Trägers 24 verfahrbar, nach Bedarf auch unabhängig voneinander. Obgleich in den Figuren nicht gezeigt, kann darüber hinaus eine weitere Achse vorgesehen sein, sodass mindestens ein Fixierelement 40 zusätzlich in der Richtung X (entlang des Tisches 10) verfahrbar ist.

Unterhalb der Bearbeitungseinheit 20 ist ferner eine Abfallaufnahme 60 vorgesehen, um bei der Bearbeitung anfallende Späne unmittelbar und mit möglichst geringer Verschmutzung der Bearbeitungsvorrichtung 1 abzuführen, wobei oberhalb der Abfallaufnahme 60 gegebenenfalls eine Abfallklappe angeordnet sein kann.

Der Betrieb der erfindungsgemäßen Bearbeitungsvorrichtung vollzieht sich beispielsweise wie folgt. Zunächst wird eine Platte 2 bereitgestellt und mittels der Greifer 32 der Verschiebeeinrichtung 30 gegriffen. In der Maschinesteuerung (nicht gezeigt) ist die Lage eines herauszutrennenden Werkstücks 2' der Platte 2 hinterlegt, wobei der herauszutrennede Abschnitt 2' in Fig. 2 bereits durch eine durchgezogene Linie gezeigt ist, obgleich er noch Teil der Platte 2 ist.

Nun wird die Platte 2 mittels der Verschiebeeinrichtung 30 in X-Richtung entlang des Tisches 10 verfahren, wobei die Platte 2 auf dem durch den Tisch bereitgestellten Luftkissen gleitet. Simultan wird die Bearbeitungseinheit 20 entlang des Trägers 24 in eine Ausgangsposition verfahren, in welcher die Bearbeitung der Platte 2 beginnen soll.

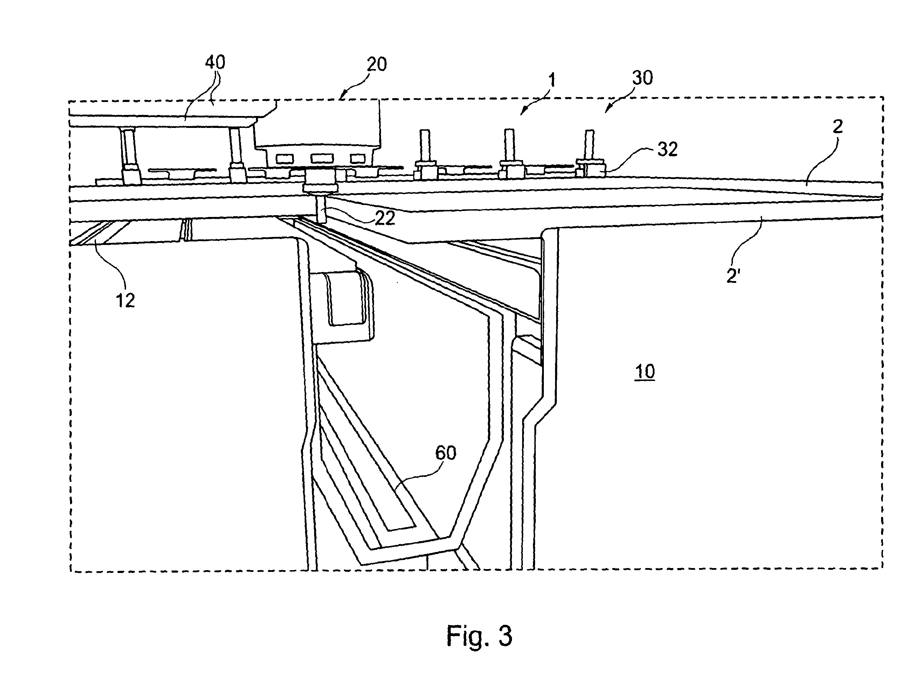

Der Bearbeitungsbeginn der Platte ist in Fig. 3 am besten zu erkennen. Diese zeigt, wie das Fräswerkzeug 22 der Bearbeitungseinheit 20 gerade in die Platte 2 eindringt, um den abzutrennenden Abschnitt 2' abzutrennen. Je nach gewünschter Schnittführung wird nun im Zuge der Bearbeitung die Bearbeitungseinheit 20 in Y-Richtung und/oder die Platte 2 mittels der Verschiebeeinrichtung 30 in X-Richtung verfahren. In dem hier gezeigten Beispiel kann die Bearbeitungseinheit 20 zunächst stationär bleiben, und die Platte 2 wird in X-Richtung (von rechts nach links in Fig. 3) verfahren, um die in Fig. 2 mit a gekennzeichnete Schnittkante zu erstellen.

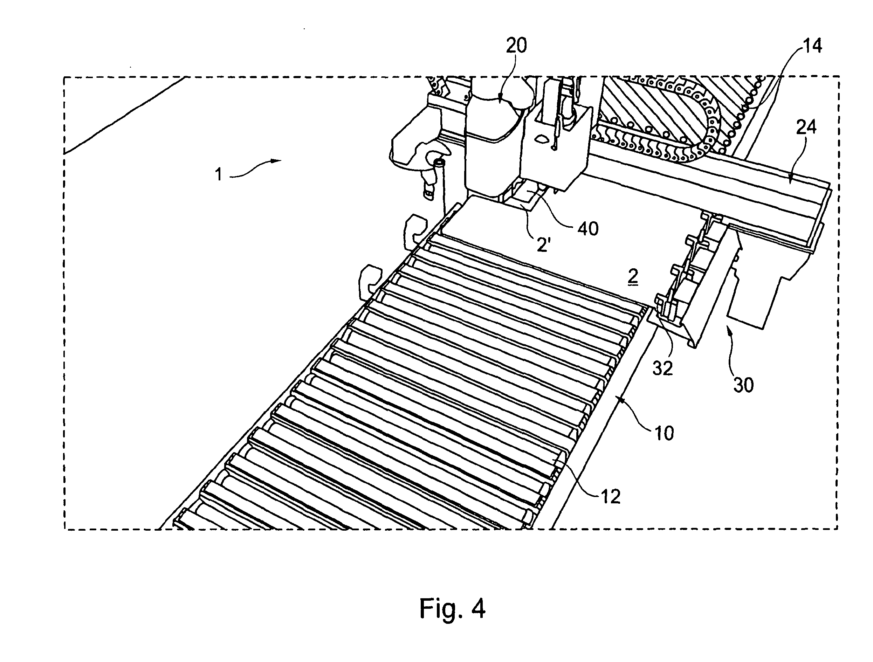

Anschließend wird zur Erstellung der in Fig. 2 gezeigten Schnittkante b die Platte 2 stationär gehalten und die Bearbeitungseinheit 20 in Y-Richtung verfahren. Je näher dabei das Bearbeitungswerkzeug 22 zu der freien Kante der Platte 2 kommt, desto instabiler wird der abzutrennende Abschnitt 2'. Daher wird rechtzeitig bevor das Bearbeitungswerkzeug 22 zu der freien Kante der Platte 2 gelangt, mindestens ein Niederhalter 40 heruntergefahren, sodass das abzutrennende Werkstück 2' in Bezug auf den Tisch 10 fixiert wird, wie in Fig. 4 gezeigt. Auf diese Weise kann der abzutrennende Abschnitt 2' abgetrennt werden ohne zu verrutschen, sodass sich eine saubere Trennkante ergibt.

Nunmehr können die absenkbaren und antreibbaren Rollen 12 des Tisches 10 hochgefahren werden, um das abgetrennte Werkstück 2 auszufördern und an die sich anschließenden Schrägförderrollen 14 zu übergeben. Gleichzeitig kann die Bearbeitungseinheit 20 in eine neue Ausgangsposition gefahren werden, und die Verschiebeeinrichtung 30 kann die Platte 2 in eine entsprechende Bearbeitungsposition verfahren, sodass sich der oben beschriebene Vorgang wiederholt.

Obgleich in den Figuren nicht gezeigt, kann die erfindungsgemäße Bearbeitungsvorrichtung vorteilhaft in ein komplexes System zum Herstellen von Werkstücken aus großformatigen Platten durch Aufteilen der Platten integriert werden. Zu diesem Zweck wird die Maschinensteuerung (nicht gezeigt) mit einem Bestelleingang vernetzt, indem eine Gruppe von Werkstücken entsprechend einer eingegangenen Bestellung datenmäßig zusammengestellt werden. Mittels dieses Bestelleinganges können Kundenaufträge verschnittoptimiert und in optimaler produktionstechnischer Reihenfolge abgearbeitet werden, sodass sich ein zügiger Produktionsprozess mit geringem Materialverbrauch ergibt. Obgleich in den Figuren ebenfalls nicht gezeigt, kann mindestens eines der Fixierelemente 40 zusätzlich ein Führungselement aufweisen, welches es ermöglicht, dass das Werkstück auf dem Tisch 10 bewegbar bleibt und das Fixierelement 40 nur die Führung des abzurennenden Werkstücks 2' in der Z-Richtung ausführt. Dabei kann das Führungselement beispielsweise durch ein Gleit- oder Abrollelement gebildet sein.

Ferner ist es im Rahmen der Erfindung möglich, obgleich in den Figuren nicht gezeigt, dass ein Fixierelement 40 zusätzlich einen Vakuumgreifer aufweist. Auf diese Weise kann gegebenenfalls auf die absenkbaren und antreibbaren Rollen 12 verzichtet werden, da das Ausfördern der abgetrennten Werkstücke 4 durch den Vakuumgreifer erfolgen kann.

Nicht zuletzt kann das Fixierelement 40, obgleich in den Figuren nicht gezeigt, auch Anschlagmittel für die Ausrichtung der Rohplatte in der X-Richtung aufweisen. Hierdurch kann die Steuerung der Verschiebeeinrichtung 30 vereinfacht werden, bzw. die Verschiebeeinrichtung 30 kann mit einfacheren und kostengünstigeren Mitteln ausgestaltet werden, da sie geringere Anforderungen hinsichtlich der Positioniergenauigkeit erfüllen muss.

## Patentansprüche

1. Bearbeitungsvorrichtung (1) zum Bearbeiten von Platten (2), insbesondere zum Aufteilen durch Ausschneiden oder Ausfräsen von Werkstücken (2') aus Platten (2), mit
mindestens einem Tisch (10) zur Aufnahme mindestens einer Platte (2),
mindestens einer in einer ersten Richtung (Y) verfahrbaren Bearbeitungseinheit (20) zur Aufnahme von Bearbeitungswerkzeugen (22) und/oder Bearbeitungsaggregaten, wobei die Bearbeitungseinheit (20) darüber hinaus in einer sich vertikal erstreckenden Richtung (Z) verfahrbar ist und
mindestens einer in einer zweiten zur ersten Richtung (Y) senkrechten Richtung (X) entlang des Tisches (10) verfahrbaren Verschiebeeinrichtung (30), wobei die Verschiebeeinrichtung (30) Mittel (32) zum Halten der mindestens einen Platte (2) an der Verschiebeeinrichtung (30) aufweist,
und die Bearbeitungsvorrichtung (1) ferner als mindestens ein Fixierelement (40) mindestens einen zu dem Tisch (10) zustellbaren Niederhalter (40) aufweist,
wobei das mindestens eine Fixierelement (40) eingerichtet ist, ein jeweils aus der Platte herauszutrennendes Werkstück (2') so lange zu fixieren, bis dieses vollständig aus der Platte (2) herausgetrennt ist,
und die Bearbeitungsvorrichtung
**dadurch gekennzeichnet ist, dass**
das mindestens eine Fixierelement (40) an einem sich in der ersten Richtung (Y) erstreckenden Träger (24) angeordnet und entlang des Trägers (24) verfahrbar ist.

2. Bearbeitungsvorrichtung nach Anspruch 1, **dadurch gekennzeichnet, dass** auch mindestens eine Bearbeitungseinheit (20) an dem Träger (24) angeordnet ist.

3. Bearbeitungsvorrichtung nach Anspruch 1 oder 2, **dadurch gekennzeichnet, dass** mehrere Fixierelemente (40) vorgesehen sind, die unabhängig voneinander betätigbar sind.

4. Bearbeitungsvorrichtung nach einem der vorhergehenden Ansprüche, **dadurch gekennzeichnet, dass** mindestens ein Fixierelement (40) zusätzlich ein Führungselement aufweist, welches es ermöglicht, dass das Werkstück auf dem Tisch (10) bewegbar bleibt und das Fixierelement (40) nur die Führung des Werkstückes (2') in der Z-Richtung ausführt.

5. Bearbeitungsvorrichtung nach einem der vorhergehenden Ansprüche, **dadurch gekennzeichnet, dass** das Fixierelement (40) zusätzlich einen Vakuumgreifer aufweist, der bevorzugt ausstellbar und/oder auch drehbar ist, so dass Werkstücke (2') manipuliert werden können.

6. Bearbeitungsvorrichtung nach einem der vorhergehenden Ansprüche, **dadurch gekennzeichnet, dass** das
Fixierelement (40) zusätzlich in der zweiten Richtung (X) verfahrbar ist.

7. Bearbeitungsvorrichtung nach einem der vorhergehenden Ansprüche, **dadurch gekennzeichnet, dass** das Fixierelement (40) zusätzlich Anschlagmittel für die Ausrichtung der Rohplatte aufweist.

8. Bearbeitungsvorrichtung nach einem der vorhergehenden Ansprüche, **dadurch gekennzeichnet, dass** sie ferner eine Transporteinrichtung (12) zum Ein- und/oder Austransportieren einer Rohplatte bzw. abgetrennter Werkstücke (4) aufweist, die bevorzugt in den Tisch (10) integriert ist.

9. Bearbeitungsvorrichtung nach einem der vorhergehenden Ansprüche, **dadurch gekennzeichnet, dass** sie ferner eine Luftkissenanordnung mit einer Mehrzahl von Lustaustrittsdüsen aufweist, die bevorzugt in den Tisch integriert sind.

10. Bearbeitungsvorrichtung nach einem der vorhergehenden Ansprüche, **dadurch gekennzeichnet, dass** der Tisch (10) im Bereich der mindestens einen Bearbeitungseinheit (20) eine Abfallaufnahme (60), insbesondere Abfallklappe zur Abfuhr von Restteilen aufweist.

11. System zum Herstellen von werkstücken aus großformatigen Platten durch Aufteilen der Platten, enthaltend
einen Bestelleingang, in dem eine Gruppe von Werkstücken entsprechend einer eingegangenen Bestellung datenmäßig zusammengestellt wird, wobei eine Datenaufbereitung
entsprechende Bearbeitungsprogramme für die Bearbeitung der Werkstücke aus einer oder mehreren Rohplatten vorwiegend verschnittoptimiert generiert, und
eine Bearbeitungsvorrichtung nach einem der vorhergehenden Ansprüche, mit welcher die Bauteile entsprechend der bestellten Ausführung und der bestellten Anzahl hergestellt werden.

## Claims

1. Processing apparatus (1) for processing boards (2), in particular for division by cutting workpieces (2') out of boards (2), having
at least one table (10) for holding at least one board (2),
at least one processing unit (20) movable in a first direction (Y) for holding processing tools (22) and/or processing assemblies, wherein the processing unit (20) is further movable in a vertically extending direction (Z) and
at least one slide mechanism (30) movable along the table (10) in a second direction (X) perpendicular to the first direction (Y), wherein the slide mechanism (30) has means (32) for holding the at least one board (2) on the slide mechanism (30),
and the processing apparatus (1) further has, as at least one fixing element (40), at least one hold-down device (40) which can be delivered to the table (10),
wherein the at least one fixing element (40) is designed to fix a workpiece (2') to be cut out of the board at the time, until it is completely cut out of the board (2),
and the processing apparatus
is **characterised in that**
the at least one fixing element (40) is disposed on a carrier (24) extending in the first direction (Y) and is movable along the carrier (24).

2. Processing apparatus according to claim 1, **characterised in that** at least one processing unit (20) is also disposed on the carrier (24).

3. Processing apparatus according to claim 1 or 2, **characterised in that** several fixing elements (40) which can be actuated independently of each other are provided.

4. Processing apparatus according to any of the preceding claims, **characterised in that** at least one fixing element (40) in addition has a guide element which makes it possible for the workpiece to remain movably on the table (10) and for the fixing element (40) to perform only guiding of the workpiece (2') in the Z direction.

5. Processing apparatus according to any of the preceding claims, **characterised in that** the fixing element (40) in addition has a vacuum gripper which is preferably pivotable and/or also rotatable, so that workpieces (2') can be manipulated.

6. Processing apparatus according to any of the preceding claims, **characterised in that** the fixing element (40) is in addition movable in the second direction (X).

7. Processing apparatus according to any of the preceding claims, **characterised in that** the fixing element (40) in addition has stop means for alignment of the unfinished board.

8. Processing apparatus according to any of the preceding claims, **characterised in that** it further has a transport device (12) for transporting an unfinished board or cutout workpieces (4) in and/or out, which is preferably integrated in the table (10).

9. Processing apparatus according to any of the preceding claims, **characterised in that** it further has an air cushion assembly having a plurality of air outlet nozzles which are preferably integrated in the table.

10. Processing apparatus according to any of the preceding claims, **characterised in that** the table (10) has in the region of the at least one processing unit (20) a waste collector (60), in particular a waste flap, for the removal of offcuts.

11. System for manufacturing workpieces from large-sized boards by division of the boards, containing
an order intake in which a group of workpieces is assembled in relation to data according to an order received, wherein data preparation generates corresponding processing programs for processing of the workpieces from one or more unfinished boards, mainly with optimisation for offcuts, and
a processing apparatus according to any of the preceding claims, with which the components are manufactured according to the design ordered and the number ordered.

## Revendications

1. Dispositif d'usinage (1) pour l'usinage de plaques (2), notamment pour la division par découpe ou fraisage de plaques (2) en pièces (2'), avec
- au moins une table (10) pour recevoir au moins une plaque (2),
- au moins une unité d'usinage (20) pouvant être déplacée dans une première direction (Y) pour recevoir des outils d'usinage (22) et/ou des groupes d'usinage, l'unité d'usinage (20) pouvant être déplacée en plus dans une direction (Z) s'étendant verticalement, et
- au moins un dispositif de déplacement (30) pouvant être déplacé dans une deuxième direction (X), perpendiculaire à la première direction (Y), le long de la table (10), le dispositif de déplacement (30) comportant des moyens (32) pour maintenir la ou les plaques (2) sur le dispositif de déplacement (30),
et le dispositif d'usinage (1) comportant aussi en tant qu'élément de fixation (40) au moins un serre-flan (40) pouvant être approché de la table (10),
le ou les éléments de fixation (40) étant conçus pour tenir une pièce (2') à séparer de la plaque jusqu'à ce que ladite pièce soit complètement séparée de la plaque (2),
et le dispositif d'usinage étant **caractérisé en ce que** le ou les éléments de fixation (40) sont agencés sur un support (24) s'étendant dans la première direction (Y) et pouvant être déplacés le long du support (24).

2. Dispositif d'usinage selon la revendication 1, **caractérisé en ce qu'**au moins une unité d'usinage (20) est agencée sur le support (24).

3. Dispositif d'usinage selon la revendication 1 ou 2, **caractérisé en ce qu'**il est prévu plusieurs éléments de fixation (40) qui peuvent être actionnés indépendamment les uns des autres.

4. Dispositif d'usinage selon l'une des revendications précédentes, **caractérisé en ce qu'**au moins un élément de fixation (40) comporte en plus un élément de guidage qui fait en sorte que la pièce reste mobile sur la table (10) et que l'élément de fixation (40) ne réalise le guidage de la pièce (2') que dans la direction Z.

5. Dispositif d'usinage selon l'une des revendications précédentes, **caractérisé en ce que** l'élément de fixation (40) comporte en plus une ventouse à vide qui peut être de préférence sortie et/ou aussi tournée de manière à pouvoir manipuler les pièces (2').

6. Dispositif d'usinage selon l'une des revendications précédentes, **caractérisé en ce que** l'élément de fixation (40) peut aussi être déplacé dans la deuxième direction (X).

7. Dispositif d'usinage selon l'une des revendications précédentes, **caractérisé en ce que** l'élément de fixation (40) comporte aussi des éléments formant butées pour l'orientation de la plaque brute.

8. Dispositif d'usinage selon l'une des revendications précédentes, **caractérisé en ce qu'**il comporte aussi un dispositif de transport (12) pour apporter et/ou enlever une plaque brute et/ou des pièces séparées (4), lequel dispositif de transport est de préférence intégré dans la table (10).

9. Dispositif d'usinage selon l'une des revendications précédentes, **caractérisé en ce qu'**il comporte en plus un dispositif à coussins d'air avec plusieurs buses de sortie d'air qui sont intégrées de préférence dans la table.

10. Dispositif d'usinage selon l'une des revendications précédentes, **caractérisé en ce que** la table (10) comporte, dans la zone de l'unité d'usinage ou des unités d'usinage (20), un dispositif de réception de déchets, notamment une trappe à déchets pour l'évacuation de chutes de coupe.

11. Système de fabrication de pièces à partir de plaques de grand format par division des plaques, contenant :
- une entrée de commande, dans laquelle un groupe de pièces est combiné de façon informatique en fonction d'une commande entrée, un traitement informatique produisant des programmes d'usinage adaptés pour l'usinage des pièces à partir d'une ou plusieurs plaques brutes de préférence avec une optimisation pour la réduction des chutes de coupe, et
- un dispositif d'usinage selon l'une des revendications précédentes, avec lequel les pièces sont fabriquées en fonction de la réalisation commandée et du nombre commandé.
